Europäisches Patentamt

(19) European Patent Office  (11) Numéro de publication: **0 063 060**
**B1**

Office européen des brevets

(12) # FASCICULE DE BREVET EUROPEEN

(45) Date de publication du fascicule du brevet:
18.07.84

(21) Numéro de dépôt: **82400443.6**

(22) Date de dépôt: **12.03.82**

(51) Int. Cl.³: **B 29 F 3/04**

---

(54) Tête pour l'extrusion d'une paraison tubulaire à au moins une couche de matière.

---

(30) Priorité: **09.04.81 FR 8107125**

(43) Date de publication de la demande:
**20.10.82 Bulletin 82/42**

(45) Mention de la délivrance du brevet:
**18.07.84 Bulletin 84/29**

(84) Etats contractants désignés:
**BE DE GB IT NL**

(56) Documents cités:
**FR - A - 2 314 048**
**US - A - 2 349 178**
**US - A - 3 382 539**

(73) Titulaire: **COMPAGNIE FRANCAISE DE RAFFINAGE**
**Société anonyme dite:, 5, rue Michel-Ange,**
**F-75781 Paris Cedex 16 (FR)**

(72) Inventeur: **Siard, Michel, 2, Route du Cap, F-76310 Saint**
**Adresse (FR)**

(74) Mandataire: **Jolly, Jean-Pierre et al, Cabinet**
**BROT 83, rue d'Amsterdam, F-75008 Paris (FR)**

BUNDESDRUCKEREI BERLIN

## Description

La présente invention concerne une tête d'extrusion destinée à réaliser l'extrusion d'une paraison tubulaire comprenant au moins une couche de matière, en vue de la fabrication de corps creux ou de films tubulaires.

Il est connu de conditionner les produits sensibles à la lumière et aux gaz, notamment les produits alimentaires, dans des récipients creux ou des films dont la paroi est constituée d'une ou plusieurs couches de polymères différents ou d'un même polymère chargé différemment. On fabrique ainsi par exemple des récipients et des films constitués par une couche de polyamide qui assure la protection aux gaz, et/ou une couche de polyéthylène qui est étanche à la lumière.

De tels récipients et films sont fabriqués par le procédé bien connu d'extrusion-soufflage. La tête d'extrusion utilisée dans ce procédé est constituée d'un empilement de brides fixes annulaires circulaires intérieurement et circulaires ou polygonales extérieurement, dont l'alésage central est traversé axialement par une torpille sur laquelle sont fixés un porte-poinçon et un poinçon de section normalement inférieure à celle dudit alésage, mais qui, pour des applications particulières, peut être égale ou supérieure à celle de l'alésage.

Entre les brides est ménagé au moins un passage tubulaire tronconique pour l'écoulement d'une nappe de polymère vers le canal tubulaire défini entre la torpille et les parois périphériques internes des brides. Dans le cas de la fabrication de récipients ou de films multicouches, plusieurs passages tronconiques sont formés, à différents niveaux de la tête, pour permettre l'écoulement des différents polymères vers ledit canal tubulaire, une nouvelle couche de matière s'ajoutant à chaque portion de canal tubulaire comprise entre deux passages tronconiques voisins, aux couches des portions précédentes.

Etant donné que la matière polymère de chaque nappe arrive radialement d'un seul côté, il se produit généralement une mauvaise répartition de la matière autour de la torpille, la matière ayant tendance à se concentrer de préférence du côté de la torpille situé en regard du point où la nappe débouche dans le canal tubulaire. Ceci conduit à l'obtention de récipients et de films défectueux, dont l'épaisseur des couches est variable d'un point à l'autre.

Pour éliminer cet inconvénient, il est connu d'insérer, dans chacune des brides qui délimitent extérieurement le ou chacun des passages tronconiques, un anneau pourvu d'un flanc interne tronconique qui, dans la position de l'anneau contré sur l'axe de la torpille, complète la paroi tronconique de ladite bride, des moyens de centrage latéraux, tels que des vis radiales, étant prévus pour régler la position radiale de l'anneau.

Lorsqu'on constate que l'épaisseur de la couche ou de l'une des couches de la paraison sortant de l'extrudeuse varie périphériquement, on excentre, par rapport à l'axe de la tête, l'anneau associé à ladite couche, en le déplaçant du côté opposé à celui par lequel arrive la matière.

Le même dispositif à vis radiales est utilisé pour le réglage de la filière. Dans ce cas, on n'utilise pas d'anneau, mais c'est la filière elle-même qui est déplacée par rapport au poinçon. Ce réglage a une action déterminante sur la rectitude de la paraison extrudée.

Cependant, une telle tête de coextrusion pose des problèmes de deux types:

### 1. Réglage des filières

a) Le réglage est empirique et sa précision est liée directement à l'expérience de l'opérateur;

b) Sur les machines automatiques à haute cadence, les éléments à atteindre pour effectueur le réglage, par exemple les vis de réglage, sont souvent inaccessibles en marche, en particulier en raison du défilement des moules sous la tête d'extrusion, ce qui oblige à des arrêts préjudiciables au coefficient d'utilisation de la machine et est nuisible à la précision du réglage obtenu;

c) La stabilité du réglage dans le temps n'est pas absolue. Elle est affectée notamment par les variations des propriétés rhéologiques de la matière pouvant provenir des modulations thermiques dues à l'action des régulateurs, du taux de matière recyclée ou autres acauses. Il en résulte qu'un contrôle permanent souvent effectué »a posteriori« sur les pièces moulées, doit être exercé;

d) Lors des périodes de reprise après un arrêt prolongé, les trois sujétions précédentes sont particulièrement contraignantes et obligent à décaler dans le temps les démarrages des différentes machines pour permettre aux régleurs de répondre aux contraintes imposées par chacune d'elles.

### 2. Comportement de la matière

Sur la tête d'extrusion précédemment décrite, le ou les anneaux de centrage et la filière sont limités par des surfaces de portage planes perpendiculaires à l'axe général de la tête. Il résulte de cette disposition que lorsqu'un anneau est excentré par rapport à l'axe de la tête, des décrochements présentant des angles vifs apparaissent sur le trajet de la matière. Ces décrochements ont pour inconvénient de constituer des espaces morts dans lesquels la matière stationne un temps suffisant pour y être thermiquement dégradée. La matière dégradée apparaît sur la surface des pièces moulées sous forme de traînées inesthétiques, ou se décroche sporadiquement, notamment pendant les réglages à l'aide des vis, avec pour conséquence la formation de »points noirs« faisant rebuter les produits moulés.

On connaît également par le brevet US-A-2 349 178 une tête d'extrusion d'une paraison tubulaire comportant au moins une couche de matière, en vue de la formation de corps creux ou de films tubulaires, ladite tête étant du type constitué par un empilement de brides annulaires, circulaires intérieurement, centrées sur l'axe général de la tête et traversées axialement avec jeu par une torpille prolongée par un porte-poinçon qui sert de support et de guide à un poinçon, l'écoulement de la matière vers le canal tubulaire défini le long de l'ensemble s'effectuant à travers au moins un passage annulaire ménagé entre lesdites brides annulaires, un anneau monté oscillant dans ledit passage annulaire autour d'un point centré sur l'axe de la tête, comportant une surface interne, une surface externe, et une surface annulaire en forme de biseau reliant les bords desdites surfaces interne et externe. Un ensemble de réglage est prévu pour commander le pivotement de l'anneau.

Cependant, une telle tête d'extrusion présente le même inconvénient que la tête d'extrusion à anneaux à flanc interne tronconique, car lorsque l'anneau oscillant est désaxé par rapport à sa position normale d'alignement avec l'axe général de la tête, sa surface annulaire biseautée forme avec la surface interne de la bride annulaire supérieure adjacente des espaces morts en retrait ou en saillie susceptibles de retenir la matière plastique en fusion.

La présente invention a pour but de remédier à cet inconvénient et concerne à cet effet une tête d'extrusion du type mentionné précédemment et qui se caractérise en ce que lesdites surfaces latérales externe et interne de l'anneaux oscillant sont en forme de zones sphériques concentriques centrées sur l'axe de la tête d'extrusion et sont respectivement en contact avec des surfaces de portage de forme complémentaires, respectivement prévues sur les brides annulaires supérieure et inférieure qui encadrent l'anneau, en ce que la surface annulaire en forme au biseau rilie les bords inférieurs desdites surfaces latérales interne et externe, et en ce que la surface latérale interne de l'anneau, sa surface biseautée et la surface complémentaire de la bride annulaire inférireure délimitant extérieurement ledit passage annulaire, font entre elles pour toutes les positions de l'anneau oscillant des angles largement obtus et sont fortement inclinées vers ledit axe et vers la sortie de la tête.

La filière également peut comporter deux surfaces latérales en forme de zones sphériques concentriques centrées sur ledit axe et qui sont respectivement en contact avec des surfaces de protage de formes complémentaires, respectivement prévues sur deux brides encadrant la filière. Une telle filière peut être montée sur une tête d'extrusion comportant un dispositif de réglage à anneau ou sur une tête d'extrusion classique non équipée d'un tel dispositif de réglage.

Un ensemble de réglage est prévu pour commander l'oscillation de l'anneau ou de chacun des anneaux et de la filière. Cet ensemble de réglage peut être disposé latéralement, mais selon un mode de réalisation préféré conforme à l'invention, il est disposé à l'extrémité de la tête qui est opposée à la filière.

Grâce à la conformation particulière, des surfaces de portage et de l'anneaux ou des anneaux, tous les espaces morts que constituaient les éléments de surface en retrait ou en saillie sur le courant de matière, dans la tête d'extrusion connue, sont remplaces par des angles largement obtus, à côtés inclinés vers la filière et ne pouvant donc pas retenir de matière.

D'autre part, du fait que l'ensemble de réglage peut être reporté à l'arrière de la tête de coextrusion, on peut l'atteindre en permanence, pendant l'utilisation de la machine et on peut y installer des dispositifs de télécommande, tels que des vérins, soit pour effecteur une commande manuelle, d'où un gain de temps et une meilleure sécurité pour les opérateurs, soit pour effectuer un contrôle permanent à partir d'un dispositif de détection de la qualité géométrique de la préforme, par exemple une cellule à action proportionnelle, montée à la sortie de la tête de coextrusion. Un tel dispositif libère le régleur de la surveillance de la préforme, particulièrement lors des démarrages, avant que ne soit obtenu l'équilibre thermique des machines.

L'invention sera décrite à présent, à titre d'exemple non limitatif, en regard des dessins annexés dans lesquels:

La fig. 1 montre une vue en coupe axiale d'une tête de coextrusion connue.

La fig. 1A à 1F représentent des détails à échelle agrandie de la fig. 1.

La fig. 2 montre une vue en coupe de la tête de coextrusion selon l'invention.

Les fig. 2G et 2H montrent des détails agrandis de la fig. 2.

La fig. 3 est une vue en coupe suivant la ligne III-III de la fig. 2.

Les fig. 4 et 5 montrent en coupe des variantes de réalisation de l'extrémité de la filière et du poinçon; et

la fig. 6 est une vue en coupe axiale d'une tête d'extrusion selon un autre mode de réalisation de l'invention.

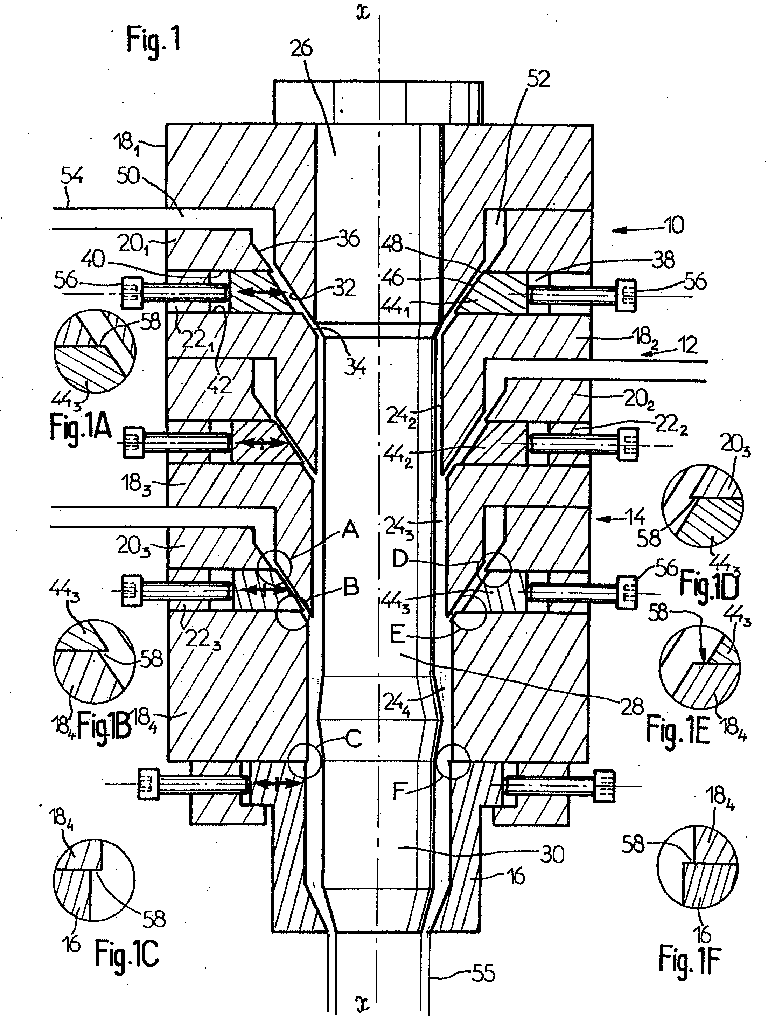

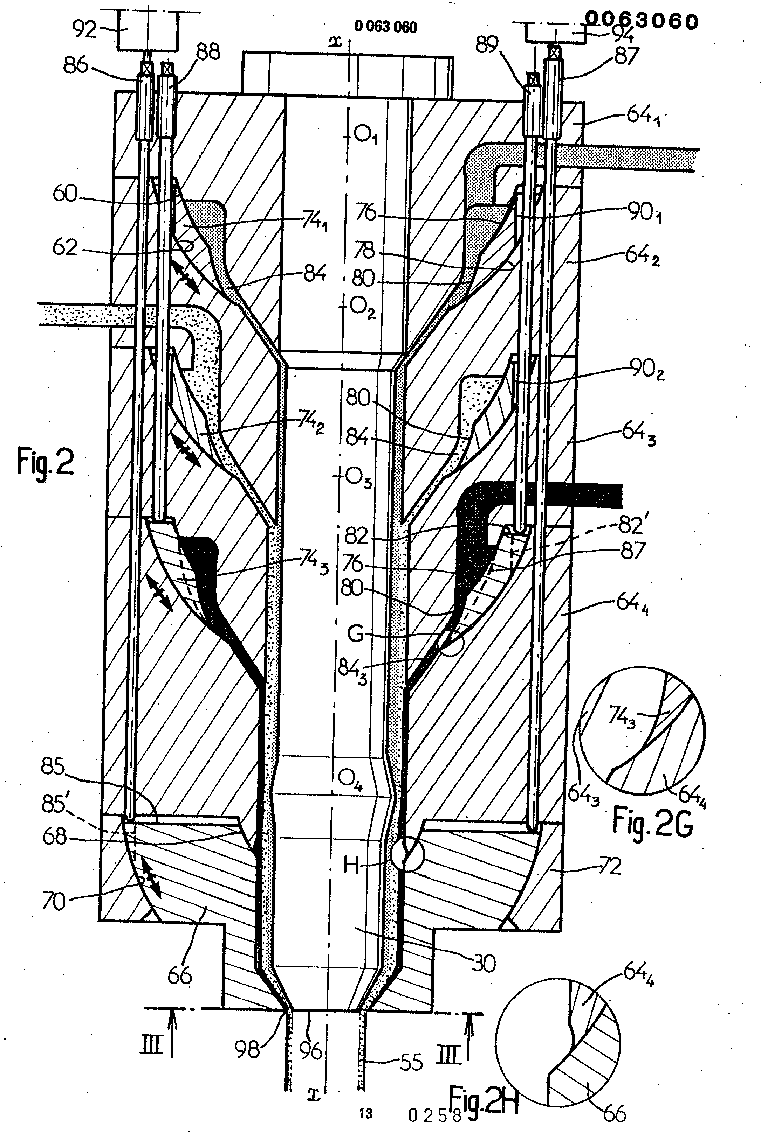

La tête d'extrusion connue, illustrée sur la fig. 1 ainsi que celle selon l'invention montrée à la fig. 2, sont destinées à l'extrusion d'une paraison à trois couches, mais il est évident que la description qui va suivre s'applique aussi bien aux cas de l'extrusion simple d'une paraison à une seule couche que de la coextrusion de paraison à plus d'une couche.

Avec référence à la fig. 1, la tête de coextrusion connue comprend de haut en bas en étage supérieur 10, un étage moyen 12, un étage inférieur 14 et une filière 16. Chacun de ces étages comprend une bride annulaire 18 en T, et deux brides annulaires plates 20 et 22 empilées les unes sur les autres. Les brides de l'étage supérieur seront affectées de l'indice 1, celles de l'étage moyen de l'indice 2 et celles de l'étage inférieur de l'indice 3. Sous la bride $18_3$ est fixée une bride annulaire de base $18_4$.

Toutes ces brides ainsi que la filière 16 présentent respectivement des alésages centrés sur la même axe x-x et traversés avec jeu par une torpille fixe 26 comprenant un porte-poinçon 28 et un poinçon 30 et qui définit avec lesdits alésages un canal tubulaire $24_2$ à $24_4$ dont l'épaisseur croît lorsqu'on passe d'une bride en T à la suivante.

Les brides 18 des chaque étage présentent sur leur pied central une paroi tronconique 32 inclinée vers l'axe x-x et vers la filière, et sur le bord supérieur de leur alésage un chanfrein tronconique 34 de même conicité que la paroi 32.

La bride plate 20 de chaque étage est disposée sous la bride 18 associée et a un diamètre interne très inférieur à celui de cette dernière. Son alésage est limité par un flanc tronconique 36 situé dans le prolongement du chanfrein 34 de la bride 18 de l'étage immédiatement inférieur. Les parois tronconiques 34 et 36 se trouvent en regard de la paroi tronconique 32 de la bride 18.

La bride plate 22 de chaque étage est interposée entre la bride 20 du même étage et la bride 18 de l'étage immédiatement inférieur et son diamètre interne est encore plus petit qui celui de la bride 20, de sorte qu'il se forme un espace annulaire 38 limité en haut par la surface horizontale inférieure 40 de la bride 20, en bas par la surface horizontale supérieure 42 de la bride 18 de l'étage voisin, et intérieurement par la paroi tronconique 32 de la bride du même étage.

Dans chacun de ces espaces annulaires 38 est inséré, avec un très faible jeu, un anneau de réglage 44 pourvu d'un alésage tronconique 46 dimensionné de façon que, lorsque l'anneau est centré sur l'axe x-x, la paroi dudit alésage vienne compléter exactement les parois tronconiques 34 et 36 dès brides 20 et 18 qui encadrent l'anneau de centrage 44, pour former ainsi une surface tronconique continue située en regard de la paroi tronconique 32 de la bride 18 du même étage. Cette surface forme, avec la paroi 32 située en regard, un étroit passage tubulaire 48 de forme tronconique qui communique avec le canal central 24.

Chacune des brides 20 présente un passage 50 aboutissant à une chambre annulaire 52 reliée au passage tubulaire 48. Au passage 50 est raccordé un conduit 54 d'amenée de la matière à extruder. Ainsi, dans le canal $24_2$ il se forme un tube de matière à une couche et à chacun des étages suivants il s'ajoute une nouvelle couche, de sorte qu'à la sortie de la filière 16 on obtient une paraison 55 à trois couches.

Dans l'exemple illustré par la fig. 1, l'étage supérieur 10 est alimenté par la gauche, l'étage moyen par la droite et l'étage inférieur par la gauche. Comme in l'a expliqué précédemment, la matière e tendance à se répartir de façon non uniforme autour des passages tubulaires 48. Pour remédier à cet inconvénient, les anneaux de réglage 44 peuvent être déplacés horizontalement dans un sens qui favorise une répartition uniforme. Dans le cas de la fig. 1, l'anneau $44_1$ a été excentré vers la gauche et les anneaux $44_2$ et $44_3$ vers la droite. On utilise à cet effet des vis de réglage 56 s'appuyant par leut extrémité sur la face externe des anneaux 44. La filière 16 peut être déplacée de la même façon au moyen de vis.

Mais, comme le montrent les détails agrandis des fig. 1A à 1F, lorsque les anneaux ou la filière sont excentrés, il apparaît des décrochements 58 présentant des angles vifs sur le trajet de la matière, avec comme consaequence, les onconvénients signalés précédemment. De plus, les vis 56 sont difficilement accessibles en marche du fait qu'elles sont placées à proximité des éléments porte-moules à mouvement alternatif ou rotatif ou des dispositifs de transfert de paraisons.

Selon l'invention, on remédie à tous ces inconvénients, en utilisant une tête d'extrusion telle que celle illustrée à la fig. 2. Il est évident que la description qui va suivre de la tête de coextrusion d'une paraison à trois couches, est transposable au cas de l'extrusion simple monocouche, ou de la coextrusion multicouche à un nombre de couches différent de trois.

La tête de coextrusion de la fig. 2 se distingue de celle de la fig. 1 par les points suivants:

— Les surfaces de portage sont constituées par des zones sphériques concentriques 60, 62, fortement inclinées vers le bas et vers l'axe x-x. Ces zones sphériques ont un même centre (respectivement $0_1$, $0_2$ et $0_3$ pour les étages supérieur, moyen et inférieur) situé sur l'axe x-x et sont formées par les parois contiguës de deux brides voisines, par exemple $64_1$ et $64_2$. La filière 66 également est guidée par deux surfaces de portage 68, 70 en forme de zones sphériques centrées en $0_4$ sur l'axe x-x et fortement inclinées vers le bas et vers ledit axe. Ces surfaces des portage sont formées par la partie inférieure de la bride $64_4$ et par la paroi interne d'une bride 72.

— Chacun des anneaux de centrage 74 est pourvu de deux parois 76, 78 en forme de zones sphériques, de même centre que les surfaces de portage contiguës 60, 62 et qui s'appliquent avec un faible jeu centre lesdites surfaces de portage, d'un biseau 80 en forme de zone sphérique, conique, torique ou ogivale, reliant les bords inférieurs des parois 76, 78 et ayant une forte inclinaison vers le bas et vers l'axe x-x, et d'une paroi supérieure 82 sensiblement horizontale. Le biseau 90 définit avec la paroi contiguë de la bride précédente un passage annulaire 84. De même, la filière 66 est limitée par deux parois en forme de zones sphériques qui s'appliquent avec un faible jeu contre les surfaces de portage 68, 70 et par une face horizontale 85.

Il en résulte que, conformément à l'invention, la matière ne rencontre nulle part sur son trajet d'espace mort dans lequel elle puisse stagner. Au contraire, tous les décrochements, par exemple ceux montrés en détail par les fig. 2G et 2H, présentent des angles fortement obtus, à parois fuyantes vers le bas, sur lesquelles la matière glisse.

Il va de soi que l'on obtient le même résultat si le biseau 80 s'étend sur toute la partie découverte de la paroi 76, comme le montre en traits tiretés la fig. 2 en 87.

— L'ensemble de réglage de la position des anneaux $74_1$, $74_2$, $74_3$ et de la filière 66 est reporté à l'arrière de la tête de coextrusion et est de ce fait accessible même pendant le fonctionnement de la tête d'extrusion.

Cet ensemble de réglage peut être constitué par exemple par trois vis disposées à 120° l'une de l'autre sur la circonférence d'un même cercle, ou par deux vis et un dispositif de rappel à ressort. Les vis peuvent être actionnées manuellement ou par des vérins. Elles peuvent être également remplacées par des vérins. Ces vérins ne sont qu'un exemple de moyen de dispositifs de télécommande, qui peuvent être contrôlés à partir d'un dispositif de détection de la qualité géométrique de la préforme.

Pour ne pas encombrer la fig. 2, on n'y a représenté que les tiges de vérin 86, 87 et les cylindres de vérin 92, 94, associés à la filière 66, et les tiges de vérin 88, 89, associées à l'anneau $74_3$.

Les tiges de vérin 86, 87 traversent les brides $64_1$, $64_2$, $64_3$ et $64_4$ ou passent à l'extérieur et s'appuient par leur extrémité sur la face horizontale 85 de la filière 66 ou son prolongement géométrique.

Quant aux tiges de vérin 88, 89, elles traversent les brides $64_1$, $64_2$ et $64_3$ et des alésages verticaux $90_1$ et $90_2$ forés respectivement à travers les anneaux $74_1$ et $74_2$ et viennent s'appuyer par leur extrémité sur la face supérieure 82 de l'anneau $74_3$.

Le mode de réglage de la tête de coextrusion selon l'invention est le suivant:

On supposera que les anneaux $74_1$ à $74_3$ et la filière 66 sont initialement positionnés de façon à admettre l'axe x-x comme axe de symétrie. Chaque passage annulaire 84 présente alors une épaisseur constante sur toute sa périphérie. Si l'on constate une irrégularité sur l'une des couches de la paraison 55 sortant de la filière 66, on élimine ce défaut en agissant dans un sens défini sur les vis ou vérins associés à l'anneau qui forme ladite couche. Par exemple, si la couche la plus extérieure de la paraison 55 est plus épaisse le long d'une génératrice située à droite sur la fig. 2, on devra enfoncer la tige de vérin 88 après avoir rentré les deux autres tiges de vérin 89. Il s'ensuit un basculement de l'anneau $74_3$ autour de point $0_3$, dans le sens des aiguilles d'un montre, l'anneau étant guidé dans ce mouvement par les surfaces de portage contiguës formées sur les brides 64 voisines, et donc un rétrécissement du canal $84_3$ du côté droit sur la figure en même temps qu'un élargissement du même canal sur son côté gauche.

Il va de soi que, comme dans la tête de coextrusion selon l'art antérieur signalé, les vis ou vérins peuvent être disposés latéralement et agir alors sur des surfaces cylindriques 82' et 85' formées sur les anneaux et la filière.

Les sections de la torpille et des alésages de brides sont toujours circulaires. Par contre, ce n'est pas obligatoirement la cas pour l'extrémité 96 du poinçon 30 et pour le bord de sortie 98 de la filière 66.

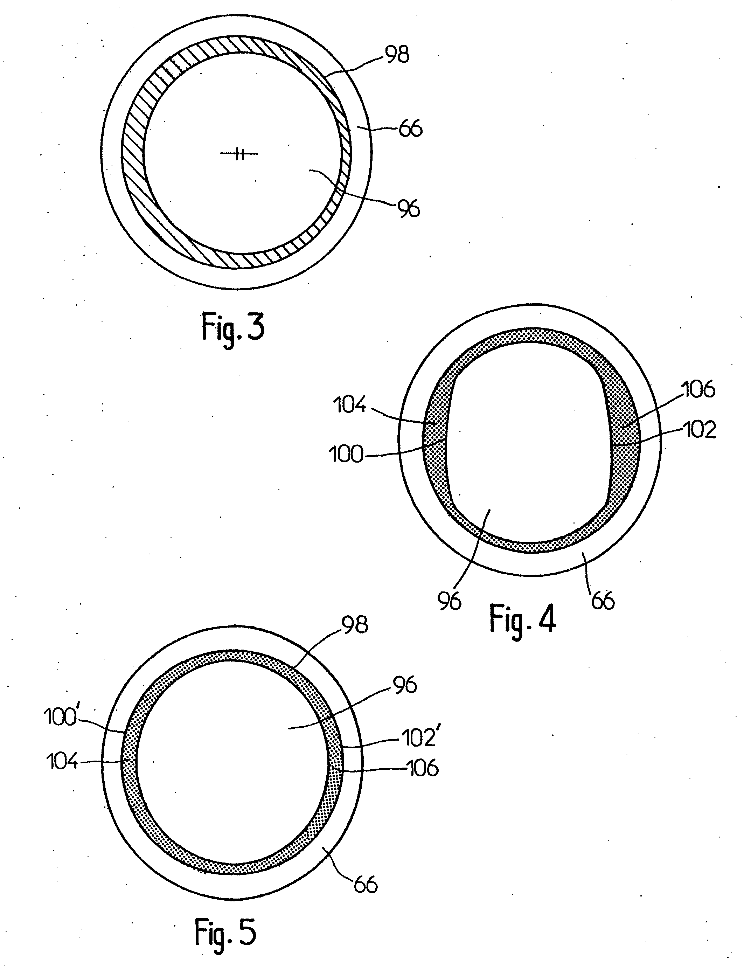

La fig. 3 montre le cas où ladite extrémité 96 et ledit bord 98 sont circulaires.

Dans les modes de réalisation des fig. 4 et 5, un usinage complémentaire est effectué sur une ou plusieurs génératrices 100, 102 (100', 102') de l'extrémité du poinçon ou du bord de cortie 98 de la filière de manière à obtenir des zones de renforcement de matière 104, 106 sur une ou plusieurs génératrices de la préforme. Cet artifice est applicable à la tête selon l'invention, comme il l'est à toutes les têtes classiques. Il permet de renforcer la paroi de la préforme en des zones où l'article à mouler doit comporter une plus grande épaisseur. C'est le cas par exemple pour les corps creux de section carrée ou rectangulaire, où les arêtes doivent être particulièrement renforcées pour résister aux chocs et contraintes.

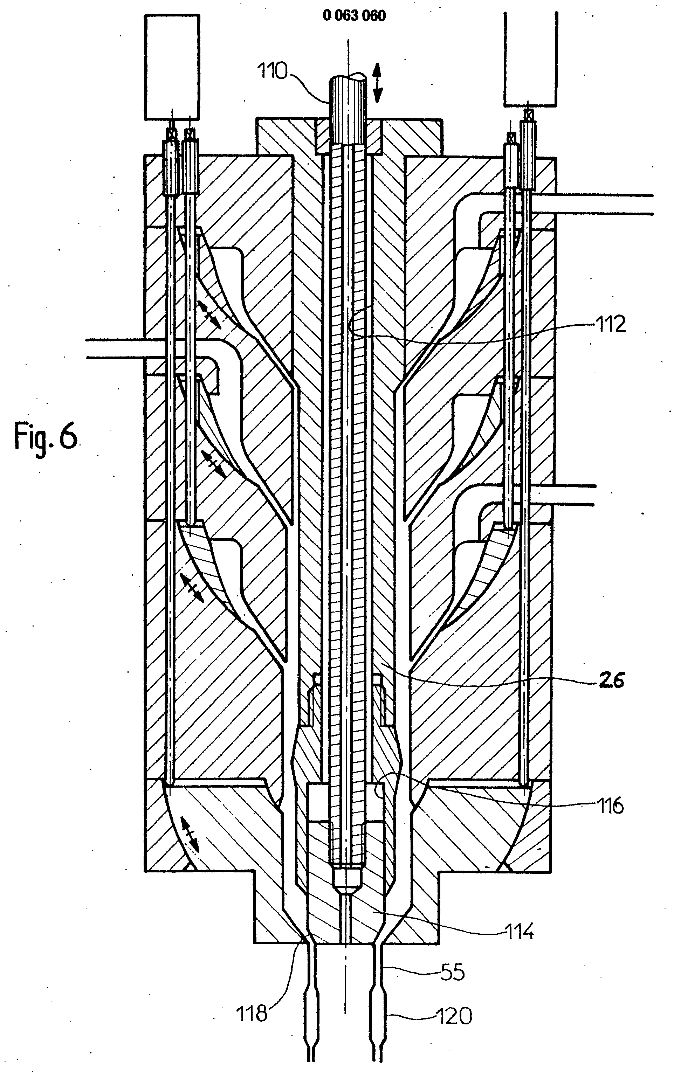

La fig. 6 montre une variante de réalisation de la tête de la fig. 2, dans laquelle le système de réglage par anneau est combiné à un dispositif de variation d'épaisseur de préforme connu en soi. Ce dispositif consiste en une tige 110 qui traverse de haut en bas un alésage axial 112 foré dans la torpille 26. L'extrémité inférieure de la tige 110 est solidarisée, par exemple par vissage, avec un poinçon 114 lequel est monté coulissant dans un alésage 116 faisant suite à l'alésage 112. La tige 110 imprime au poinçon 114 un mouvement alternatif, programmé par l'intermédiaire d'un système de commande hydraulique, pneumatique, mécanique, électrique ou autre puvant agir sur l'extrémité supérieure de la tige.

Il en résulte que l'»entrefer« compris entre la paroi tronconique 118 du poinçon 114 et le bord de sortie 98 de la filière varie en épaisseur. On obtient ainsi une préforme 55 programmée en épaisseur, présentant des variations d'épaisseur qui permettent d'optimiser la quantité de matière en fonction des besoins sur l'objet fini.

**Revendications**

1. Tête d'extrusion d'une paraison tubulaire comportant au moins une couche de matière, en vue de la formation de corps creux ou de films tubulaires, ladite tête étant du type constitué par un empilement de brides annulaires (18, 20, 22), circulaire intérieurement, centrées sur l'axe général de la tête et traversées axialement avec jeu par une torpille (26) prolongée par un porte-poinçon (28) qui sert de support et de guide à un poinçon (30), l'écoulement de la matière vers le canal tubulaire (24) défini le long de l'ensemble s'effectuant à traverse au moins un passage annulaire (84) ménagé entre lesdites brides annulaires (18, 20, 22), un anneau (74$_2$ à 74$_3$) monté oscillant dant ledit passage annulaire (84) autour d'un point (0$_1$) centré sur l'axe (x-x) de la tête, comportant une surface latérale interne (76), une surface externe (78), et une surface annulaire en forme de biseau (80) reliant les bords desdites surfaces interne (76) et externe (78), caractérisée en ce que lesdites surfaces latérales externe (78) et interne (76) de l'anneau oscillant (74$_1$ à 74$_3$) sont en forme de zones sphériques concentriques, centrées sur l'axe de la tête d'extrusion et sont respectivement en contact avec des surfaces de portage (60, 62) de formes complémentaires, respectivement prévues sur les brides annulaires supérieure (64$_1$) et inférieure (64$_2$) qui encadrent l'anneau, en ce que la surface annulaire en forme de biseau (80) relie les bords inférieurs desdites surfaces latérales interne et externe, et en ce que la surface latérale interne (76) de l'anneau (74$_1$ à 74$_3$), sa surface biseautée (80) et la surface complémentaire (62) de la bride annulaire inférieure (64$_2$) délamitent extérieurement ledit passage annulaire (84), font entre elles pour toutes les positions de l'anneau oscillant (74$_1$ à 74$_3$), des angles largement obtus et sont fortement inclinées vers ledit axe et vers la sortie de la tête.

2. Tête d'extrusion selon la revendication 1, caractérisée en ce que la filière (66) également comporte deux surfaces latérales en forme de zones sphériques concentriques, centrées sur ledit axe et qui sont respectivement en contact avec des surfaces de portage (68, 70) de formes complémentaires respectivement prévues sur deux brides (64$_4$, 72) ecadrant la filière.

3. Tête d'extrusion selon l'une des revendications 1 et 2, caractérisée en ce qu'un ensemble de réglage (86 à 89) est prévu pour commander l'oscillation de l'anneau ou de chacun des anneaux et de la filière.

4. Tête d'extrusion selon la revendication 1, caractérisée en ce que le biseau (80) est en forme de zone conoqie, sphérique, torique ou ogivale.

5. Tête d'extrusion selon la revendication 1, caractérisée en ce que l'anneau de réglage ou chacun des anneaux de réglage (74$_1$ à 74$_3$) et la filière (66) comportent une surface annulaire supérieure ou arrière (82 et 85), perpendiculaire à l'axe général de la tête, l'ensemble de réglage étant disposé à l'extrémité de la tête qui est opposée à la filière et agissant sur lesdites surfaces arrière.

6. Tête d'extrusion selon la revendication 1, caractérisée en ce que l'anneau de réglage ou chacun des anneaux de réglage (74$_1$ à 74$_3$) et la filière (66) comportent chacun une surface cylindrique (82' et 85'), tournée vers l'extérieur et ayant pour axe l'axe général de la tête, l'ensemble de réglage étant disposé latéralement autour de la tête et agissant sur lesdites surfaces cylindriques.

7. Tête d'extrusion selon l'une des revendications précédentes, caractérisée en ce que l'ensemble de réglage est constitué par des vis ou des verins (86 et 92, 87 et 94, 88, 89) associés à chacun des anneaux (74$_1$ à 74$_3$) et à la filière (66).

8. Tête d'extrusion selon l'une des revendications 5 et 7, caractérisée en ce que les vis ou les vérins (86, 87, 88, 89) traversent des taraudages ou des alésages (90$_1$, 90$_2$) parallèles à l'axe général de la tête et forés dans les brides et le ou les anneaux situés au-dessus de la filière (66) ou de l'anneau considéré (74$_1$ à 74$_3$).

9. Tête d'extrusion selon l'une des revendications 7 ou 8, caractérisée en ce que l'ensemble de réglage comprend, pour l'anneau ou pour chacun des anneaux (74$_1$ à 74$_3$) et pour la filière (66), au moins trois vérins ou vis de réglage.

10. Tête d'extrusion selon l'une des revendications 7 et 8, caractérisée en ce que l'ensemble de réglage comprend pour l'anneau ou pour chacun des anneaux et pour la filière, deux vérins ou vis de réglage et un dispositif de rappel.

11. Tête d'extrusion selon l'une des revendications 1 à 10, caractérisée en ce que les vis ou vérins de réglage sont actionnés par des dispositifs de télécommande commandés par des dispositifs de détection des qualités géométriques de la préforme.

12. Tête d'extrusion selon l'une des revendications précédentes, caractérisée en ce que l'extrémité (97) du poinçon (30) et le bord de sortie (98) de la filière (66) sont circulaires.

13. Tête d'extrusion selon l'une des revendications 1 à 11, caractérisée en ce que l'extrémité (96) du poinçon présente un ou plusieurs chanfreins (100, 102) définissant, avec le bord de sortie (98) de la filière, des passages élargis (104, 106) donnant naissance à des zones de renforcement sur la préforme.

14. Tête d'extrusion selon l'une des revendications 1 à 11, caractérisée en ce que le bord de sortie (98) de la filière présente un ou plusieurs évidements (100', 102') définissant avec le poinçon des passages élargis (104, 106) donnant naissance à des zones de renforcement sur la préforme.

15. Tête d'extrusion selon l'une des revendications précédentes, caractérisée en ce qu'elle comprend un dispositif de variation d'épaisseur de préforme connu en soi, consistant en une tige (110) qui traverse un alésage axial foré dans la torpille (26) et dont l'extrémité inférieure porte un poinçon (114) terminé par une surface tronconique (118), ladite tige et le poinçon qui lui est solidaire pouvant être mis en mouvement alternatif, par l'intermédiaire d'un système de commande hydraulique, pneumatique, mécanique, électrique ou autre.

**Patentansprüche**

1. Extrusionskopf zum Extrudieren eines Hohlformlings mit mindestens einer Materialschicht für die Herstellung von Hohlkörpern oder schlauchförmigen Filmen, welcher aus einem Stapel von ringförmigen Flanschen (18, 20, 22) besteht, die innen kreisrund, auf der Kopfhauptachse zentriert und axial mit Spiel von einem Torpedo (26) durchsetzt sind, der durch einen als Support und Führung für einen Dorn (30) dienenden Dornträger (28) verlängert ist, wobei das Material durch mindestens einen zwischen den ringförmigen Flanschen (18, 20, 22) ausgebildeten Ringkanal (84) zu dem entlang des Ganzen verlaufenden, rohrförmigen Kanal (24) fließt und ein in dem Ringkanal (84) um einen auf der Kopfachse (X-X) zentrierten Punkt ($O_1$) oszillierend angeordneter Ring ($74_1$ bis $74_3$) eine innere Seitenfläche (76), eine äußere Fläche (78) und eine die Ränder der inneren Fläche (76) und der äußeren Fläche (78) verbindende Ringfläche in Form einer Abschrägung (80) aufweist, dadurch gekennzeichnet, daß die äußere Seitenfläche (78) und die innere Seitenfläche (76) des oszillierenden Ringes ($74_1$ bis $74_3$) als konzentrische, auf der Extrusionskopfachse zentrierte Kugelzonen ausgebildet sind und mit Tragflächen (60, 62) komplementärer Formen in Berührung stehen, die an dem oberen ringförmigen Flansch ($64_1$) und an dem unteren ringförmigen Flansch ($64_2$) vorgesehen sind, welche den Ring einschließen, daß die Ringfläche in Form einer Abschrägung (80) die unteren Ränder der inneren und äußeren Seitenflächen verbindet, und daß die innere Seitenfläche (76) des Ringes ($74_1$ bis $74_3$), seine abgeschrägte Fläche (80) und die komplementäre Fläche (62) des unteren ringförmigen Flansches ($64_2$) den Ringkanal (84) außen begrenzen, für alle Positionen des oszillierenden Ringes ($74_1$ bis $74_3$) weitgehend stumpfe Winkel zwischen sich einschließen und zur besagten Achse sowie zum Kopfausgang hin stark geneigt sind.

2. Extrusionskopf nach Anspruch 1, dadurch gekennzeichnet, daß die Düse (66) ebenfalls zwei Seitenflächen in Form von konzentrischen, auf der besagten Achse zentrierten Kugelzonen aufweist, welche mit Tragflächen (68, 70) komplementärer Formen in Berührung stehen, die an zwei die Düse einschließenden Flanschen ($64_4$, 72) vorgesehen sind.

3. Extrusionskopf nach Anspruch 1 oder 2, dadurch gekennzeichnet, daß ein Regelsystem (86 bis 89) zur Steuerung der Oszillation des Ringes oder jedes der Ringe und der Düse vorgesehen ist.

4. Extrusionskopf nach Anspruch 1, dadurch gekennzeichnet, daß die Abschrägung (80) als konische, kugelige, torische oder spitzbogenförmige Zone ausgebildet ist.

5. Extrusionskopf nach Anspruch 1, dadurch gekennzeichnet, daß der Regelring oder jeder der Regelringe ($74_1$ bis $74_3$) und die Düse (66) eine obere oder rückwärtige, zur Kopfhauptachse senkrechte Ringfläche (82 und 85) aufweisen, wobei das Regelsystem an dem der Düse abgewandten Kopfende angeordnet ist und auf die rückwärtigen Flächen einwirkt.

6. Extrusionskopf nach Anspruch 1, dadurch gekennzeichnet, daß der Regelring oder jeder der Regelringe ($74_1$ bis $74_3$) und die Düse (66) jeweils eine nach außen gewandte, zylindrische Fläche (82' und 85') mit der Kopfhauptachse als Achse aufweisen, wobei das Regelsystem seitlich um den Kopf herum angeordnet ist und auf die zylindrischen Flächen einwirkt.

7. Extrusionskopf nach einem der vorstehenden Ansprüche, dadurch gekennzeichnet, daß das Regelsystem aus Schraubspindeln oder Stellzylindern (86 und 92, 87 und 94, 88, 89) besteht, welche jedem der Ringe ($74_1$ bis $74_3$) und der Düse (66) zugeordnet sind.

8. Extrusionskopf nach einem der Ansprüche 5 und 7, dadurch gekennzeichnet, daß die Schraubspindeln oder die Stellzylinder (86, 87, 88, 89) zur Kopfhauptachse parallele Innengewinde oder Bohrungen ($91_1$, $90_2$) durchsetzen, welche in die Flansche und den oder die oberhalb der Düse (66) oder des jeweiligen Ringes ($74_1$ bis $74_3$) liegenden Ringe gebohrt sind.

9. Extrusionskopf nach einem der Ansprüche 7 oder 8, dadurch gekennzeichnet, daß das Regelsystem für den Ring oder jeden der Ringe ($74_1$ bis $74_3$) und die Düse (66) wenigstens drei Regelstellzylinder oder -schraubspindeln aufweist.

10. Extrusionskopf nach einem der Ansprüche 7 und 8, dadurch gekennzeichnet, daß das Regelsystem für den Ring oder jeden der Ringe und die Düse zwei Regelstellzylinder oder -schraubspindeln und eine Rückholvorrichtung aufweist.

11. Extrusionskopf nach einem der Ansprüche 1 bis 10, dadurch gekennzeichnet, daß die Regelschraubspindeln oder -stellzylinder durch Fernsteuervorrichtungen betätigt werden, welche von Vorrichtungen zum Erfassen der geometrischen Eigenschaften des Vorformlings gesteuert werden.

12. Extrusionskopf nach einem der vorstehenden Ansprüche, dadurch gekennzeichnet, daß das Ende (96) des Dornes (30) und der Ausgangsrand (98) der Düse (66) kreisrund sind.

13. Extrusionskopf nach einem der Ansprüche 1 bis 11, dadurch gekennzeichnet, daß das Ende (96) des Dornes eine oder mehrere Abflachungen (100, 102) aufweist, welche mit dem Ausgangsrand (98) der Düse verbreiterte Kanäle (104, 106) definieren, die beim Vorformling Verstärkungszonen zustandekommen lassen.

14. Extrusionskopf nach einem der Ansprüche 1 bis 11, dadurch gekennzeichnet, daß der Ausgangsrand (98) der Düse eine oder mehrere Aussparungen (100', 102') aufweist, welche mit dem Dorn verbreiterte Kanäle (104, 106) definieren, die beim Vorformling Verstärkungszonen zustandekommen lassen.

15. Extrusionskopf nach einem der vorstehenden Ansprüche, gekennzeichnet durch eine an sich bekannte Vorrichtung zur Veränderung der Dicke des Vorformlings, welche aus einer eine Axialbohrung im Torpedo (26) durchsetzenden Stange (110) besteht, deren unteres Ende einen Dorn (114) trägt, welcher in einer konischen Fläche (118) endet, wobei die Stange und der daran befestigte Dorn mittels eines hydraulischen, pneumatischen, mechanischen, elektrischen oder sonstigen Steuersystems hin- und herbewegt werden können.

## Claims

1. A head for extruding a tubular parison comprising at least one layer of material, for forming hollow bodies or tubular films, said head being of the type formed by a stack of annular collars (18, 20, 22), circular on the inside, centered on the general axis of the head and having passing axially therethrough with a torpedo (26) extended by a punch holder (28) which serves as support and guide for a punch (30), the flow of material towards the tubular channel (24) defined along the assembly taking place through at least one annular passage (84) formed between said annular collars (18, 20, 22); a ring ($74_1$ to $74_3$) mounted for oscillation in said annular passage (84) about a point ($0_1$) centered on the axis (X-X) of the head, comprising a lateral internal surface (76), an external surface (78) and an annular bevel shaped surface (80) connecting together the edges of said internal (76) and external (78) surfaces, characterized in that said external (78) and internal (76) lateral surfaces of the oscillating ring ($74_1$ to $74_3$) are in the form of concentric spherical zones centered on the axis of the extrusion head and are respectively in contact with bearing surfaces (60, 62) with complementary shapes, respectively provided on the upper ($64_1$) and lower ($64_2$) annular collars which surround the ring, in that the bevel shaped annular surface (80) connects together the lower edges of said internal and external lateral surfaces and in that the internal lateral surface (76) of the ring ($74_1$ to $74_3$), its bevelled surface (80) and the complementary surface (62) of the lower annular collar ($46_2$) define outwardly said annular passage (84), form therebetween for all the positions of the oscillating ring ($74_1$ to $74_3$) broadly obtuse angles and are highly inclined towards said axis an towards the outlet of the head.

2. Extrusion head according to claim 1, characterized in that the bushing (66) also comprises two lateral surfaces in the form of concentric spherical zones centered on said axis and which are respectively in contact with bearing surfaces (68, 70) having complementary shapes provided respectively on two collars ($64_4$, 72) surrounding the bushing.

3. Extrusion head according to one of claims 1 and 2, characterized in that an adjustment assembly (87 to 89) is provided for controlling the oscillation of the ring or of each of the rings of the bushing.

4. Extrusion head according to claim 1, characterized in that the bevel (80) is in the form of a conical, spherical, toric or ogival zone.

5. Extrusion head according to claim 1, characterized in that the adjustment ring or each of the adjustment rings ($74_1$ to $74_3$) and the bushing (66) comprise an upper or rear annular surface (82 and 85), perpendicular to the general axis of the head, the adjustment assembly being disposed at the end of the head which is opposite the bushing and acting on said rear surfaces.

6. Extrusion head according to claim 1, characterized in that the adjustment ring or each of the adjustment rings ($74_1$ to $74_3$) and the bushing (66) each comprise a cylindrical surface (82' and 85'), turned outwardly and having for axis the general axis of the head, the adjustment assembly being disposed laterally about the head and acting on said cylindrical surfaces.

7. Extrusion head according to one of the oreceding claims, characterized in that the adjustment assembly is formed by screws of jacks (86 and 92, 87 and 94, 88, 89) associated with each of the rings ($74_1$ to $74_3$) and with the bushing (66).

8. Extrusion head according to one of claims 5 and 7, characterized in that the screws or the jacks (86, 87, 88, 89) pass through tapped bores or bores (91, 92) parallel to the general axis of the head and formed in the collars and the ring or rings situated above the bushing (66) or the ring considered ($74_1$ to $74_3$).

9. Extrusion head according to one of claims 7 or 8, characterized in that the adjustment assembly comprises, for the ring or for each of the rings ($74_1$ to $74_3$) and for the bushing (66), at least three adjustment jacks or screws.

10. Extrusion head according to one of claims 7 and 8, characterized in that the adjustment assembly comprises for the ring or for each of the rings and for the bushing, two adjustment jacks or screws and a return device.

11. Extrusion head according to one of claims 1 to 10, characterized in that the adjustment screws or jacks are actuated by remote control devices controlled by devices detecting the geometrical qualities of the preform.

12. Extrusion head according to one of the preceding claims, characterized in that the end (96) of the punch (30) and the outlet edge (98) of the bushing (66) are circular.

13. Extrusion head according to one of claims 1 to 11, characterized in that the end (96) of the punch has one or more chamfers (100, 102) defining, with the outlet edge (98) of the bushing, widened passages (104, 106) giving rose to reinforcement zones on the preform.

14. Extrusion head according to one of claims 1 to 11, characterized in that the outlet edge (98) of the bushing has one or more recesses (100'; 102') defining with the punch widened passages (104, 106) giving rise to reinforcement zones on the preform.

15. Extrusion head according to one of the preceding claims, characterized in that it comprises a preform thickness variation device known per se, consisting of a rod (110) which passes through an axial bore formed in the torpedo (26) and whose lower end carries a punch (114) ending in a truncated cone shaped surface (118), said rod and the punch which is integral therewith being reciprocated by means of a hydraulic, pneumatic, mechanical, electric or other system.

9

Fig. 1

Fig.1A

Fig.1B

Fig.1C

Fig.1D

Fig.1E

Fig.1F

Fig. 2

Fig. 2G

Fig. 2H

Fig. 3

Fig. 4

Fig. 5

Fig. 6

0 063 060

17